**Europäisches Patentamt**

**European Patent Office**

**Office européen des brevets**

(11) Veröffentlichungsnummer: **0 115 610**
**B1**

(12) **EUROPÄISCHE PATENTSCHRIFT**

(45) Veröffentlichungstag der Patentschrift:
**10.06.87**

(21) Anmeldenummer: **83112736.0**

(22) Anmeldetag: **17.12.83**

(51) Int. Cl.⁴: **A 23 K 1/175, A 23 K 1/16**

(54) Mittel zur Förderung der Proteinsynthese bei Tieren.

(30) Priorität: **04.01.83 DE 3300137**

(43) Veröffentlichungstag der Anmeldung:
**15.08.84 Patentblatt 84/33**

(45) Bekanntmachung des Hinweises auf die Patenterteilung:
**10.06.87 Patentblatt 87/24**

(84) Benannte Vertragsstaaten:
**FR GB NL**

(56) Entgegenhaltungen:
**EP-A-0 049 671**
**DE-A-2 546 051**
**DE-A-2 704 746**

(73) Patentinhaber: **Dr. Franz Köhler Chemie GmbH, Neue Bergstrasse 3 - 7, D-6146 Alsbach- Hähnlein 1 (DE)**

(72) Erfinder: **Köhler, Franz, Dr., Neue Bergstrasse 3 - 7, D-6146 Alsbach- Hähnlein 1 (DE)**

(74) Vertreter: **Zinngrebe, Horst, Dr.rer.nat., Saalbaustrasse 11, D-6100 Darmstadt (DE)**

## Beschreibung

Es ist bekannt, daß das Bioelement Zink als struktureller Bestandteil der Ribonucleinsäurepolymerasen und der Desoxiribonucleinsäurepolymerasen (W.S. Wegener u. A.H. Romano; Science, 142 (1963), 1669 - J.E. Coleman; Biochem. Biophys. Res. Comm., 60 (1974), 641 - M. Fujioka u. I. Liebermann, J. Biol. Chem., 239 (1964), 1164 - J.P. Slater, A.S. Mildvan u. L.A. Loeb; Biochem. Biophys. Res. Comm., 44 (1971), 37), sowie als Aktivator zahlreicher Enzymsysteme (W. Seeling u. I. Seeling; Zinkstoffwechsel: Bedeutung für Klinik und Praxis; TM-Verlag, Bad Oeynhausen, 1979) für das Wachstum juveniler Tiere unentbehrlich ist. Umgekehrt verursacht Zinkmangel bei Tieren eine Störung der Proteinsynthese, Wachstumsstillstand, Haarverlust, Reduzierung des enchondralen Knochenwachstums und andere pathophysiologische Stoffwechselentgleisungen (R. C. Theuer u. W.C. Hiekstra, J. of Nutrit., 89 (1966), 448 - H.C. Day u. E.V. McCollum; Proc. Soc. Exp. Biol. Med., 45 (1940), 282 - R.H. Follis, H.G. Day u. E.V. McCollum; J. of Nutrit., 22 (1941), 223 - E. Hove, C.A. Elvehjem u. E.B. Hart; Am. J. Physiol., 119 (1937), 768 - F.E. Stirn, C.A. Elvehjem u. E.B. Hart; J. Biol. Chem., 109 (1935), 347).

Davon ausgehend konnte N. Danzig (Deutsche Offenlegungsschrift 2 704 746) den Nachweis erbringen, dan Zink-methionat (1;2) bei Kälbern, Rindern und Schafen einen wachstumsfördernden Effekt ausübt, unter gleichzeitiger Futtereinsparung bei der Intensivmast, wobei die optimale Dosis in einem Bereich von 250 bis 1500 ppm Zink-methionat (1:2) liegt.

Es ist weiterhin bekannt, daß auch ein Mangel an dem Bioelement Kupfer bei jungen Tieren, die einen hohen Kupferbedarf haben, Wachstumsschäden, insbesondere im Bereiche der Knochen, des Reproduktionssystems und des Zentralnervensystems verursacht (Th. Bersin: Biochemie der Mineral- und Spurenelemente, Akad. Verlagsges., Frankfurt-Main, 1963). Unter humanmedizinischen Bedingungen ist bei der intravenösen Hyperalimentation mit Aminosäurelösungen beobachtet worden, ebenso bei der Beschleunigung der Wundheilung durch Zink, daß nicht immer die bloße Zinksubstitution zu einem reproduzierbaren Erfolg führt, daß im Gegenteil häufig Versager auftreten. Derartige kontroverse Reaktionen konnten mit einem bestehenden Defizit an Kupfer aufgeklärt werden, das durch eine anhaltende Zinkapplikation sogar noch zunehmen kann. Zink und Kupfer haben die gleiche Orbitalbesetzung und wirken daher einmal im Stoffwechsel antagonistisch, die beiden Elemente können aber auch im Sinne synergistischer Effekte zur Geltung kommen (M. David, M.D. Ota, V. Bruce, M.D. MacFadyen, T. Elisabeth, B. S. Gum, J. Stanley u. M.D. Dudrick; in: Zinc and Copper in Clinical Medicine, SP Medical & Scientific Books, New York, 1976). Kupfermangel behindert die vollständige Auswertung der Nahrung, wie den Ergebnissen einer Studie von A. Cordano (in: Zinc and Copper in Clinical Medicine; loco cit.) zu entnehmen ist.

Der wachstumsfördernde Effekt, des für die Schweinemast in üblicher Weise verwendeten Kupfersulfats in der Dosierung von 250 ppm/Futter wird der germiziden und fungiziden Eigenschaft des Kupfers zugeschrieben, doch werden diese antibakterieilen Effekte neuerdings auf Grund eingehender Untersuchungen angezweifelt, wobei der pharmakodynamischen Wirkung auf die nutritiven Eigenschaften des Kupfers das Primat zugeschrieben wird (M.G. Beyer; Landw. Forschung, 29 (1970), 53 - M. Kirchgeßner u. E. Grassmann; Z. Tierphysiol., Tierernähr. u. Futtermittelkde., 26 (1970), 3 - H. Meyer u. H, Kröger; Übers. Tierern,, 1 (1973), 9).

In diesem Sinne hat N. Danzig bestätigt, daß Kupfer(II)-methionat in Dosen von 250-900 mg als wachstumsfördernder Zusatz bei der Fütterung von Schweinen geeignet ist (DP 2 546 051).

Wir haben gefunden, daß die Chelate der Asparaginsäure mit Zink und mit Kupfer in den in der Ansprichen angegebenen Mengen besonders aktive Wirkstoffe in Bezug auf die Erhöhung der Proteinsyntheserate in der Leber, die der von anderen, im gleichen Sinne zur Anwendung kommenden Verbindungen, z. B. Kupfersulfat, Kupfer(II)-methionat und Zinkmethionat signifikant überlegen sind, wie im folgenden gezeigt wird:

Methode:

Je 6 männliche Wistar-Ratten mit einem Startgewicht von ca. 60 g wurden in Markolonkäfigen auf Hobelspaneinstreu gehalten. Die Raumtemperatur betrug $24 \pm 1°C$. Wasser und das nach Drepper und Weik (1972) zusammengesetzte Futter für alle aus je sechs Tieren bestehenden Rattengruppen ist in Tabelle 3 angegeben. Gemäß dem in Tabelle 1 aufgeführten Versuchsplan wurde für die Rattengruppen 2 und 3 diesem Futter jeweils Zinkaspartat, für die Rattengruppen 4 und 5 jeweils Kupferaspartat und für die Rattengruppen 6 und 7 jeweils ein Gemisch aus Zinkaspartat und Kupferaspartat in den in Tabelle 1 angegebenen Dosierungen zugesetzt.

Die Wirkung des Zusatzes von Kupferaspartat zum Futter in den in Tabelle 2 angegebenen Dosen wurde verglichen mit der Wirkung von Zusätzen von Kupfersulfat oder Kupfermethionat zum Futter der Rattengruppen gemäß Versuchsplan B (Tabelle 2).

Tab. 1: Versuchsplan A

| Gruppe | n | Substanz | Dosis (ppm Metall) | Fütterungs-dauer |
|--------|---|----------|--------------------|-------------------|
| 1 | 6 | Kontrolle | - | |
| 2 | 6 | Zn-aspartat | 3,5 | |
| 3 | 6 | Zn-aspartat. | 7,0 | |
| 4 | 6 | Cu-aspartat | 50,0 | 2 Wochen |
| 5 | 6 | Cu-aspartat | 100,0 | |
| 6 | 6 | Zn- u. Cu-aspartat | 3,5 + 50,0 | |
| 7 | 6 | Zn- u. Cu-aspartat | 7,0 + 50,0 | |

Tab. 2: Versuchsplan B

| Gruppe | n | Substanz | Dosis ppm Metall | Dosis ppm Substanz | Fütterungs-dauer |
|---|---|---|---|---|---|
| 1 | 6 | Kontrolle | - | - | |
| 2 | 6 | $CuSO_4$ | 25 | 62,8 | |
| 3 | 6 | $CuSO_4$ | 50 | 125,6 | |
| 4 | 6 | $CuSO_4$ | 100 | 251,3 | |
| 5 | 6 | Cu-aspartat | 25 | 132,3 | 2 Wochen |
| 6 | 6 | Cu-aspartat | 50 | 264,6 | |
| 7 | 6 | Cu-aspartat | 100 | 529,1 | |
| 8 | 6 | Cu-methionat | 25 | 119,0 | |
| 9 | 6 | Cu-methionat | 50 | 238,1 | |
| 10 | 6 | Cu-methionat | 100 | 476,2 | |

Tab. 3: Zusammensetzung der nach Drepper u. Weik (1972) zusammengestellten Diät

<u>Zusammensetzung der Diät:</u>
18 % Fischmehl (64 % Rohprotein)
13 % Sojaextraktionsschrot (43 % Rohprotein)
30 % Maisquellmehl
28 % Weizenkleie
 2 % Saccharose
 4 % Sojaöl
 3 % Mineralstoffmischung
 <u>2 %</u> Vitaminmischung
100 %

<u>Rohnährstoffgehalte</u> (Weender Analyse)
Rohprotein  18,3 %
Rohfett      6,3 %
Rohfaser     9,8 %
Rohasche     8,3 %

<u>Mineralstoffe und Spurenelemente</u>

| Ca | 10,0 g | |
|---|---|---|
| P | 7,5 g | |
| Mg | 3,5 g | |
| Na | 3,5 g | |
| K | 14,0 g | |
| Fe | 170,0 mg | |
| Mn | 90,0 mg | |
| Zn | 20,0 mg | /kg Futter |
| Cu | 5,0 mg | |
| J | 0,4 mg | |
| Mo | 0,25 mg | |
| F | 3,6 mg | |
| Se | 0,22 mg | |
| Co | 0,12 mg | |

<u>Vitamine</u> ( /kg Futter)

| Vit. A | 15000 I.E. |
|---|---|
| Vit. $D_3$ | 500 I. |
| Vit. E | 150 I.E. |
| Vit. K | 10 mg |
| Vit. $B_1$HCl | 20 mg |
| Vit. $B_2$ | 20 mg |
| Vit. $B_6$HCl | 15 mg |
| Vit. $B_{12}$ | 20 µg |
| Ca-Pantothenat | 50 mg |
| Nikotinsäure | 50 mg |
| Cholinchlorid | 1 g |
| Folsäure | 10 mg |
| Biotin | 200 µg |
| Inosit | 100 mg |
| p-Aminobenzoes. | 100 mg |
| Vit. C | 20 mg |
| Methionin | 1,5 g |

Messung der Proteinsyntheserate in der Leber nach Kaemmerer und Dey-Hazra (Vet. Med. Nachr. 2 (1980), 99).

Am Ende der Fütterungsperiode wurden die Tiere um 8.00 h MEZ durch zervikale Dislokation getötet.

Die Aufarbeitung der Leberproben richtete sich nach den Arbeitsvorschriften von Appel (Diss. Hannover, 1973):

3 g Leber wurden in eisgekühlter TKM-Puffer-Saccharose-Lösung homogenisiert, in der Ultrazentrifuge bei 10000 g 20 Minuten lang zentrifugiert und der Überstand als "Mikrosomenzellsaft" zur Eiweißsynthese herangezogen. Nach der Bestimmung des Proteingehaltes im Mikrosomenzellsaft mittels Biuret-Methode wurde die Eiweißkonzentration im Gemisch mit TKM-Puffer auf 1,0 mg/ml eingestellt. Hiernach wurden zu 0,25 ml dieses Mikrosomenzellsaftes (= 0,25 mg Protein) 0,15 ml Reaktionsgemisch nach Siler u. Fried (Biochem. J., 109 (1968), 185), 5 µl Pyruvatkinase-Lösung sowie 0,1 ml $^{14}$C-Aminosäurengemisch zugefügt und bei 37°C 35 Minuten inkubiert. Der Rückstand wurde mit Trichloressigsäure (10 %) 8 bis 12 mal gewaschen und nach Erreichen des Blindwertes im PRIAS-Flüssigkeits-Szintillationszähler PL (Packard) nach Zusatz von Digestin® (Merck) zur Auflösung des Eiweißes und Zugabe von Szintillationsflüssigkeit (6 ml Lipoluma®, Baker) gemessen. Weitere Einzelheiten der Methodik s. bei Kaemmerer und Dey-Hazra (loco cit.).

Ergebnisse:

Die Ergebnisse der vergleichenden Prüfung von Zink-aspartat, Kupfersulfat, Kupfer-aspartat und Kupfer-methionat, sowie die Kombination von Zink- mit Kupfer-aspartat an Ratten sind in der folgenden Tabelle 4 und Abbildung 1 dargestellt.

Tab. 4: Ergebnisse der Bestimmungen der Proteinsyntheserate in der Leber von Ratten nach Fütterung über 2 Wochen

| Substanz | Dosis (ppm Metall) | CPM $\bar{x}$ | s | % geg.Kontr. | Signifikanz |
|---|---|---|---|---|---|
| Kontrolle | - | 345 | 42 | - | - |
| Zink-aspartat | 3,5 | 345 | 24 | ∅ | - |
| Zink-aspartat | 7,0 | 382 | 44 | + 10,7 | nicht signif. |
| Kupfer-aspartat | 50,0 | 412 | 43 | + 19,4 | signifikant |
| Kupfer-aspartat | 100,0 | 419 | 50 | + 21,4 | signifikant |
| Zink- u. Kupfer-aspartat | 3,5 + 50 | 443 | 26 | + 28,4 | hoch signif. |
| Zink- u. Kupfer-aspartat | 7,0 + 50 | 420 | 24 | + 21,7 | hoch signif. |
| Kontrolle | - | 390 | 48 | - | - |
| Zink-methionat | 3,5 | 381 | 24 | - 2,3 | nicht signif. |
| Zink-methionat | 7,0 | 356 | 38 | - 8,7 | nicht signif. |
| Zink-methionat | 14,0 | 391 | 59 | + 0,3 | nicht signif. |

Tab. 5: Zahl der mit einer Steigerung der Proteinsynthese reagierenden Ratten nach Kupfer-Zulage zum Futter

| Dosis (ppm Cu$^{2+}$) | Mit Steigerung der Proteinsynthese reagierende Tiere (6 Tiere pro Gruppe) | |
|---|---|---|
| | CuSO$_4$ | Kupfer-aspartat |
| 25 | 1 | 2 |
| 50 | 4 | 6 |
| 100 | 5 | 6 |

Tab. 6: Übersicht der Optimalwerte der Proteinsynthese in der Rattenleber

| Substanz | ppm Cu/Futter (Substanz) | ppm Cu/Futter (Element) | statistische Sicherung |
|---|---|---|---|
| CuSO$_4$ | 125,7 | 50 | - |
| CuSO$_4$ | 251,3 | 100 | x |
| Kupfer-aspartat | 264,6 | 50 | xx |
| Kupfer-aspartat | 529,1 | 100 | xxx |
| Kupfer-methionat | 238,1 | 50 | x |
| Kupfer-methionat | 476,2 | 100 | - |

Abb. 1: Ergebnisse der Messungen der Proteinsyntheserate in der Leber von männlichen Ratten nach Vorfütterung über zwei Wochen.

| | K | 25 | 50 | 100 | K | 25 | 50 | 100 | K | 25 | 50 | 100 |
|---|---|---|---|---|---|---|---|---|---|---|---|---|
| x̄ | 726 | 678 | 852 | 951 | 573 | 592 | 703 | 765 | 1354 | 1403 | 1652 | 1580 |
| s | 78 | 109 | 106 | 146 | 36 | 40 | 71 | 62 | 103 | 216 | 272 | 229 |
| p | | 0,428 | 0,057 | 0,014 | | 0,455 | 0,005 | <0,001 | | 0,660 | 0,047 | 0,073 |

Abb. 2: Proteinsyntheserate von Leberzellmikrosomen nach Vorfütterung mit verschiedenen Kupfersalzen über 2 Wochen bei Ratten (Dosisangaben in mg / kg Futter Cu**).

Kommentar zu den Tabellen 4-6 und zur Abbildung 2:

Kupfersulfat:

Kupfersulfat verursacht in dieser Versuchsanordnung eine leichte Verminderung der Proteinsynthese in der Leber um 6,6 % bei einer Dosis von 25 mg Cu/kg Futter. Dieser Effekt war statistisch nicht abzusichern; demgegenüber bewirkt eine Dosis von 100 mg Cu/kg Futter eine Steigerungsrate von 31.0 % der Leberproteinsynthese, die im Vergleich mit der Kontrollgruppe einen signifikanten Stellenwert hat.

Kupfer-aspartat:

Unter der Einwirkung von 25, beziehungsweise 50 mg oder 100 mg Kupfer/kg Futter wurde die Proteinsyntheserate um 3,3 %, beziehungsweise 22,7 % und um 33,5 % gesteigert. Die gemessenen Werte sind bei 50 mg signifikant und bei 100 mg Kupfer/kg Futter hochsignifikant.

Kupfer-methionat:

Bei der Zufütterung von 25 mg Kupfer-methionat/kg Futter wird die Rate der Proteinsynthese in der Leber um 5,6 % gesteigert, bei 50 mg Kupfer-methionat um 22,0 %, die sich statistisch als signifikant erweist und bei 100 mg nur noch um 16,7 %.

Nach der Futtermittelverordnung für Schweine darf das Futter 125 mg Kupfer/kg Futter, für Ferkel bis zu 16 Wochen 200 mg Kupfer/kg Futter enthalten. Nach Kirchgeßner (Bayer. Landw. Jb., 50 (1973), 79) verursacht eine über den Bedarf hinausgehende Kupferdosis keine erhöhte Leistung und keine Verbesserung der Gesundheit. Die geltende Auffassung erfordert zum Auslösen eines nutritiven Effektes eine Mindestdosis von 100 mg Kupfer/kg Futter. Mengen im Bereich von 62-63 mg/kg Futter sind unwirksam, wie von Meyer und Kröger gezeigt wurde (Übers. Tierern., 1 (1973), 44). Diese Feststellung bestätigt die Befunde von Kirchgeßner und Friesecke (Wirkstoffe in der praktischen Tierernährung; Bayer. Land. Verlg., München 1966), daß anabole Effekte ausbleiben, wenn die Kupferzufütterung auf etwa 50 mg/kg Futter vermindert wird. Kaemmerer und Kietzmann (D. tierärztl. Wochenschr., im Druck) zeigen, daß die Steigerung der Lebereiweiß-Synthese bei der Zugabe von 100 mg Kupfersulfat/kg Futter größer ist, als bei niedrigeren Konzentrationen. Demgegenüber reagieren aber bei 50 mg Kupfer/kg Futter als Aspartat oder Methionat gleich viele Tiere, wie der Abbildung 2 zu entnehmen ist, die außerdem die hohe Überlegenheit von Kupfer-aspartat signifikant darstellt.

Zink-aspartat:

Zink-aspartat steigert die Proteinsynthese in der Leber um 10,7% nach Zufütterung von 7 mg Zink/kg Futter.

Zink-methionat:

Zink-methionat verursacht in den Dosierungen von 3,5 oder 7,0 oder 14,0 mg Zink/kg Futter keine Steigerung der Proteinsynthese in der Leber von Ratten; im Vergleich mit den Kontrolltieren. Bei den geringeren Dosierungen wird sogar eine leichte Verminderung der Eiweißsynthese gemessen.

Kombination von Zink- und Kupfer-aspartat:

Die gemeinsame Zufütterung von 50 mg Kupfer-aspartat/kg Futter und 3,5 mg, beziehungsweise 7,0 mg Zink-aspartat/kg Futter, bewirkt mit 28,4% und 21,7% hochsignifikante Steigerungen der Proteinsynthese in der Leber, im Vergleich mit den Kontrollgruppen.

## Patentansprüche

1. Futtermittel-Zusatz zur Verbesserung der Proteinsynthese bei der Tiermast, enthaltend Zinkaspartat in einer Dosierung von etwa 1 mg bis etwa 10 mg Zink als Zinkaspartat pro 1 kg Futtermittel.

2. Futtermittel-Zusatz zur Verbesserung der Proteinsynthese bei der Tiermast, enthaltend Kupferaspartat in einer Dosierung von etwa 10 bis etwa 100 mg Kupfer als Kupferaspartat pro 1 kg Futtermittel.

3. Futtermittel-Zusatz zur Verbesserung der Proteinsynthese bei der Tiermast, enthaltend ein Gemisch von Zinkaspartat und Kupferaspartat mit etwa 3 bis etwa 20 mg Zink als Zinkaspartat pro 1 kg Futtermittel und etwa 25 bis etwa 100 mg Kupfer als Kupferaspartat pro 1 kg Futtermittel.

## Claims

1. Feedstuff additive for improving the protein synthesis during fattening of animals, containing zinc aspartate according to a dosage of about 1 to about 10 mg of zinc as zinc aspartate per 1 kg of feedstuff.

2. Feedstuff additive for improving the protein synthesis during fattening of animals, containing copper aspartate according to a dosage of about 10 to 100 mg of copper as copper aspartate per 1 kg of feedstuff.

3. Feedstuff additive for improving the protein synthesis during fattening of animals, containing a mixture of zinc aspartate and copper aspartate with about 3 to 20 mg of zinc as zinc aspartate per 1 kg of feedstuff and about 25 to about 100 mg of copper as copper aspartate per 1 kg of feedstuff.

## Revendications

1. Complément de nourriture pour améliorer la synthèse des protéines lors d'engraissement d'animaux, contenant de l'aspartate de zinc selon un dosage d'environ 1 à environ 10 mg de zinc comme aspartate de zinc par 1 kg de nourriture.

2. Complément de nourriture pour améliorer la synthèse des protéines lors d'engraissement d'animaux, contenant de l'aspartate de cuivre selon un dosage d'environ 10 à environ 100 mg de cuivre comme aspartate de cuivre par 1 kg de nourriture.

3. Complément de nourriture pour améliorer la synthèse des protéines lors d'engraissement d'animaux, contenant un mélange d'aspartate de zinc et d'aspartate de cuivre avec environ 3 à environ 20 mg de zinc comme aspartate de zinc par 1 kg de nourriture et environ 25 à environ 100 mg de cuivre comme aspartate de cuivre par 1 kg de nourriture.